(19) Europäisches Patentamt
European Patent Office
Office européen des brevets

(11) **EP 3 128 738 A2**

(12) **EUROPEAN PATENT APPLICATION**
published in accordance with Art. 153(4) EPC

(43) Date of publication:
**08.02.2017   Bulletin 2017/06**

(51) Int Cl.:
***H04N 5/225*** (2006.01)

(21) Application number: **15772355.2**

(22) Date of filing: **03.04.2015**

(86) International application number:
**PCT/KR2015/003394**

(87) International publication number:
**WO 2015/152691 (08.10.2015 Gazette 2015/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.04.2014   KR 20140040633**

(71) Applicants:
 • **Wise Automotive Corporation**
  **Seoul 151-015 (KR)**
 • **SL Corporation**
  **Gyeongsan-si, Gyeongsangbuk-do 712-837 (KR)**

(72) Inventors:
 • **LEE, Jung-Pyo**
  **Goyang-si**
  **Gyeonggi-do 411-737 (KR)**
 • **RYU, Choon-Woo**
  **Incheon 406-840 (KR)**
 • **KIM, Sang-Gu**
  **Seoul 151-841 (KR)**
 • **PARK, Jae-Hong**
  **Seoul 151-015 (KR)**
 • **KWON, Seok-Keon**
  **Seoul 137-889 (KR)**

(74) Representative: **Regimbeau**
 **20, rue de Chazelles**
 **75847 Paris Cedex 17 (FR)**

(54) **APPARATUS AND METHOD FOR GENERATING IMAGE AROUND VEHICLE**

(57)    The present invention relates to an apparatus and a method for creating an image of the area around a vehicle. The apparatus for creating an image of the area around a vehicle includes: an aerial-view image creation unit that creates an aerial-view image by converting an image of an area around a vehicle, which is taken by a camera unit mounted on the vehicle, into data on a ground coordinate system projected with the camera unit as a visual point; a movement-area aerial-view image creation unit that creates a movement-area aerial-view image that is an aerial view of a movement area of the vehicle, by extracting the movement area, after a previous aerial-view image is created by the aerial-view image creation unit; a combined aerial-view image creation unit that creates a combined aerial-view image by combining a subsequent aerial-view image, which is a current image created after the previous aerial-view image is created, with the movement-area aerial-view image that is a past image; and a combined aerial-view image correction unit that creates a corrected combined aerial-view image by correcting an image to differentiate the subsequent aerial-view image that is the current image and the movement-area aerial-view image that is the past image.

100

FIG. 2

**Description**

[Technical Field]

The present invention relates to an apparatus and method for peripheral image generation of vehicle. In particular, the present invention relates to an apparatus for creating an image of the area around a vehicle such that a past image and the current image are differentiated when obtaining an image of the area behind the vehicle and then displaying the image on a monitor, and a method thereof

[Background Art]

In general, a vehicle is a machine that transports people or freight or performs various jobs while running on roads using a motor such as an engine therein as a power source, and a driver is supposed to safely drive a vehicle while viewing the forward area.

However, a driver has difficulty viewing the area behind the vehicle when driving the vehicle backward, for example, when parking. Accordingly, a display device that outputs images from a camera on the rear part of a vehicle on a monitor has been used as a device for displaying the area behind a vehicle.

In particular, a technology that can accurately find out the relative position between a vehicle and a parking spot in an image displayed on a monitor through a technology of changing an input image from a camera into an aerial view has been proposed in Korean Patent Application Publication No. 2008-0024772.

However, this technology has a problem in that it is impossible to display objects outside of the current visual field of the camera. For example, when a vehicle is driven backward for parking, the parking lines in areas that the vehicle has already passed (outside of the current visual field) cannot be displayed.

Accordingly, there is a need for a technology that can create an image for displaying objects outside of the current visual field of the camera. Therefore, technology for combining an image previously taken from a vehicle with the current image to display objects outside of the current visual field of a camera has been proposed. However, this technology does not differentiate between a past image and a current image, so a driver completely trusts the past image, and accordingly, an accident occurs in many cases.

Accordingly, there is a need for a technology that can differentiate a current image that is taken at present by a camera and a past image that is not taken at present by the camera. Further, beyond a technology for sensing dangerous objects against the current state of a vehicle, there is a need for a technology that can provide a warning through a monitor by determining whether there is possibility of a collision when a vehicle keeps moving at the current rotational angle by extracting the current turning angle ofthe vehicle.

[Disclosure]

[Technical Problem]

Accordingly, the present invention has been made keeping in mind the above problems occurring in the prior art, and an object ofthe present invention is to make it possible to display objects outside of the current visual field of a camera by combining aerial views of images of the area around a vehicle that are taken at different times by a camera such that a current image and a past image are differentiated in the combined image.

Another object of the present invention is to make it possible to display a dangerous area around a vehicle, where there is a possibility of a collision of the vehicle with objects around the vehicle, in a combined aerial-view image, using an ultrasonic sensor in the vehicle.

Another object of the present invention is to make it possible to display a dangerous area around a vehicle, where there is a possibility of a collision of the vehicle with objects around the vehicle, in a combined aerial-view image, depending on a turning angle of the vehicle by extracting the turning angle of the vehicle using a steering wheel sensor in the vehicle.

[Technical Solution]

In order to accomplish the above object, the present invention provides an apparatus for creating an image of an area around a vehicle, the apparatus including: an aerial-view image creation unit that creates an aerial-view image by converting an image of an area around a vehicle, which is taken by a camera unit mounted on the vehicle, into data on a ground coordinate system projected with the camera unit as a visual point; a movement-area aerial-view image creation unit that creates a movement-area aerial-view image that is an aerial view of a movement area of the vehicle, by extracting the movement area, after a previous aerial-view image is created by the aerial-view image creation unit;

a combined aerial-view image creation unit that creates a combined aerial-view image by combining a subsequent aerial-view image, which is a current image created after the previous aerial-view image is created, with the movement-area aerial-view image that is a past image; and a combined aerial-view image correction unit that creates a corrected combined aerial-view image by correcting an image to differentiate the subsequent aerial-view image that is the current image and the movement-area aerial-view image that is the past image.

The movement-area aerial-view image creation unit may extract a movement area of the vehicle on the basis of wheel pulses created by a wheel speed sensor in the vehicle for a left wheel and a right wheel of the vehicle.

The combined aerial-view image correction unit may include a past image processor that processes the movement-area aerial-view image that is the past image.

The past image processor may perform at least one of color adjustment, desaturation, blur, sketch, sepia, negative, embossing, and mosaic processing on the movement-area aerial-view image that is the past image.

The past image processor may process the movement-area aerial-view image that is the past image in different ways step by step on the basis of past time points.

The past image processor may detect parking lines from the movement-area aerial-view image that is the past image in the combined aerial-view image and may then perform image processing on the parking lines.

The past image processor may detect parking lines from the movement-area aerial-view image that is the past image in the combined aerial-view image and then make the parking lines conspicuous by performing image processing on areas other than the parking lines.

The combined aerial-view image correction unit may include a dangerous image processor that shows a dangerous area in the combined aerial-view image in response to a possibility of collision of the vehicle.

The dangerous area processor may display a dangerous area by displaying a virtual turning area of a front corner of the vehicle from the front corner of the vehicle to a side by correcting the combined aerial-view image in response to the distance between the vehicle and an object sensed by at least one ultrasonic sensor in the vehicle.

The dangerous area processor may extract a turning angle of the vehicle through a steering wheel sensor in the vehicle and display a dangerous area by displaying a virtual turning area of a front corner of the vehicle from the front corner of the vehicle to a side by correcting the combined aerial-view image in response to the turning angle of the vehicle.

In order to accomplish the above object, the present invention provides a method of creating an image of the area around a vehicle, the method including: creating an aerial-view image by converting an image of an area around a vehicle, which is taken by a camera unit mounted on the vehicle, into data on a ground coordinate system projected with the camera unit as a visual point, by means of aerial-view image creation unit; creating a movement-area aerial-view image that is an aerial view of a movement area of the vehicle, by extracting the movement area, after a previous aerial-view image is created in the creating of an aerial-view image, by means of a movement-area aerial-view image creation unit; creating a combined aerial-view image by combining a subsequent aerial-view image, which is a current image created after the previous aerial-view image is created, with the movement-area aerial-view image that is a past image, by means of a combined aerial-view image creation unit; and creating a corrected combined aerial-view image by correcting an image to differentiate the subsequent aerial-view image that is the current image and the movement-area aerial-view image that is the past image, by means of a combined aerial-view image correction unit.

The creating of a movement-area aerial-view image may extract a movement area of the vehicle on the basis of wheel pulses created by a wheel speed sensor in the vehicle for a left wheel and a right wheel of the vehicle.

The creating of a corrected combined aerial-view image may comprise processing of the movement-area aerial-view image that is the past image in the combined aerial-view image.

The processing of the movement-area aerial-view image that is the past image may perform at least one of color adjustment, desaturation, blur, sketch, sepia, negative, embossing, and mosaic processing on the movement-area aerial-view image that is the past image.

The processing of the movement-area aerial-view image that is the past image may process the movement-area aerial-view image that is the past image in different ways step by step on the basis of past time points.

The processing of the movement-area aerial-view image that is the past image may detect parking lines from the movement-area aerial-view image that is the past image in the combined aerial-view image and then perform image processing on the parking lines.

The processing of the movement-area aerial-view image that is the past image may detect parking lines from the movement-area aerial-view image that is the past image in the combined aerial-view image and then make the parking lines conspicuous by performing image processing on areas other than the parking lines.

The creating of a corrected combined aerial-view image may include displaying a dangerous area in the combined aerial-view image in response to a possibility of collision of the vehicle.

The displaying of a dangerous area may display a dangerous area by displaying a virtual turning area of a front corner of the vehicle from the front corner of the vehicle to a side by creating the corrected combined aerial-view image in response to the distance between the vehicle and an object sensed by at least one ultrasonic sensor in the vehicle.

The displaying of a dangerous area may extract a turning angle of the vehicle through a steering wheel sensor in the vehicle and display a dangerous area by displaying a virtual turning area of a front corner of the vehicle from the front corner of the vehicle to a side by creating the corrected combined aerial-view image in response to the turning angle of the vehicle.

[Advantageous Effects]

According to the present invention, it is possible to display objects outside of the current visual field of a camera by combining aerial views of images of the area around a vehicle that are taken at different times by a camera such that a current image and a past image are differentiated in the combined image.

Further, according to the present invention, it is possible to display a dangerous area around a vehicle, where there is a possibility of a collision of the vehicle with objects around the vehicle, in a combined aerial view image, using an ultrasonic sensor in the vehicle.

Further, according to the present invention, it is possible to display a dangerous area around a vehicle, where there is a possibility of a collision of the vehicle with objects around the vehicle, in a combined aerial-view image, depending on the turning angle of the vehicle by extracting the turning angle of the vehicle using a steering wheel sensor in the vehicle.

[Description of Drawings]

FIG. 1 is a schematic view showing main parts of an apparatus for creating an image of the area around a vehicle according to the present invention.

FIG. 2 is a block diagram of an apparatus for creating an image of the area around a vehicle according to the present invention.

FIG. 3 is a view showing a positional relationship in coordinate conversion that is performed by an apparatus for creating an image of the area around a vehicle according to the present invention.

FIG. 4 is a view for illustrating the concept of an apparatus for creating an image of the area around a vehicle according to the present invention.

FIG. 5 is a view showing a wheel pulse for the left rear wheel of a vehicle created by an embodiment of an apparatus for creating an image of the area around a vehicle according to the present invention.

FIG. 6 is a view showing a wheel pulse for the right rear wheel of a vehicle created by an embodiment of an apparatus for creating an image of the area around a vehicle according to the present invention.

FIG. 7 is a view for illustrating a method of extracting an area to which a vehicle has moved by an embodiment of an apparatus for creating an image of the area around a vehicle according to the present invention.

FIGS. 8 and 9 are views for illustrating the state before an apparatus for creating an image of the area around a vehicle according to the present invention corrects a combined aerial-view image.

FIG. 10 is a view showing an embodiment of a combined aerial-view image correction unit in an apparatus for creating an image of the area around a vehicle according to the present invention.

FIGS. 11 to 13 are views showing output images on a display unit according to an embodiment of an apparatus for creating an image of the area around a vehicle according to the present invention.

FIG. 14 is a view for illustrating the concept of a dangerous area image processor of the combined aerial-view image correction unit according to the present invention.

FIGS. 15 and 16 are views for illustrating the operation principle of the dangerous area image processor of the combined aerial-view image correction unit according to the present invention.

FIG. 17 is a flowchart of a method of creating an image of the area around a vehicle according to the present invention.

[Mode for Invention]

The present invention will be described hereafter in detail with reference to the accompanying drawings. Further, repetitive descriptions and well-known functions and configurations that may unnecessarily make the spirit of the present invention unclear are not described in detail.

The embodiments are provided to more completely explain the present invention to those skilled in the art.

Therefore, the shapes and sizes of the components in the drawings may be exaggerated for more clear explanation.

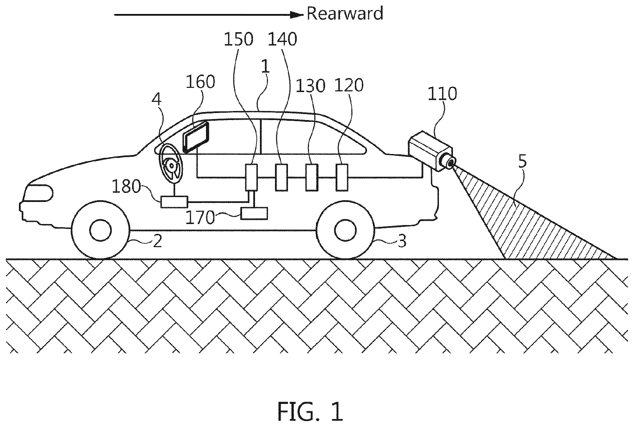

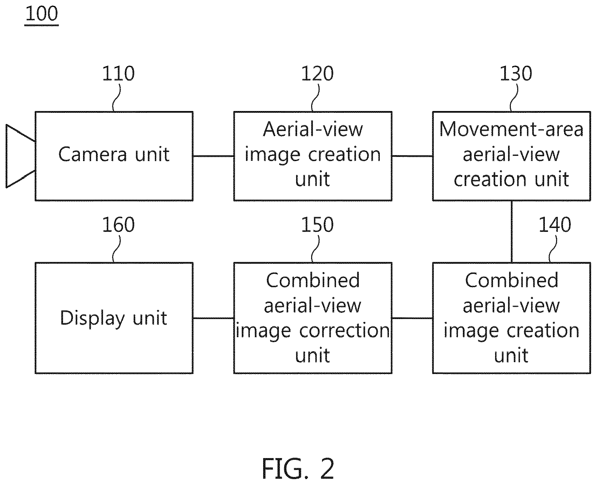

The basic system configuration of an apparatus for creating an image of the area around a vehicle according to the present invention is described with reference to Figs. 1 and 2.

Fig. 1 is a schematic view showing main parts of an apparatus for creating an image ofthe area around a vehicle according to the present invention. FIG. 2 is a block diagram of an apparatus for creating an image of the area around a vehicle according to the present invention.

Referring to FIG. 1, an apparatus for creating an image of an area around a vehicle, the apparatus include: an aerial-view image creation unit 120 that creates an aerial-view image by converting an image of the area 5 around a vehicle 1, which is taken by a camera unit 110 mounted on the vehicle, into data on a ground coordinate system projected with the camera unit 110 as a visual point; a movement-area aerial-view image creation unit 130 that creates a movement-area aerial-view image that is an aerial view of a movement area of the vehicle 1, by extracting the movement area, after a previous aerial-view image is created by the aerial-view image creation unit 120; a combined aerial-view image creation unit 140 that creates a combined aerial-view image by combining a subsequent aerial-view image, which is a current image created after the previous aerial-view image is created, with the movement-area aerial-view image that is a past image; and a combined aerial-view image correction unit 150 that creates a corrected combined aerial-view image by correcting an image to differentiate the subsequent aerial-view image that is the current image and the movement-area aerial-view image that is the past image.

Further, the apparatus may further include a display unit 160 that is mounted in the vehicle 1 and displays the corrected combined aerial-view image.

Further, the apparatus may sense objects around the vehicle by including at least one ultrasonic sensor 170 in the vehicle 1.

Further, the apparatus may extract a turning angle of the vehicle 1 by including a steering wheel sensor 180.

The aerial-view image creation unit 120, the movement-area aerial-view image creation unit 130, the combined aerial-view image creation unit 140, and the combined aerial-view image correction unit 150, which are main parts of the apparatus 100 for creating an image of the area around a vehicle according to the present invention, are electronic devices for processing image data, including a microcomputer, and may be integrated with the camera unit 110.

The camera unit 110 is mounted on the vehicle 1 and creates an image by capturing the peripheral area 5.

As shown in FIG. 1, the camera unit 110 is disposed on the rear part of the vehicle and includes at least one camera (for example, a CCD camera).

The aerial-view image creation unit 120 creates an aerial-view image by converting the image created by the camera unit 110 into data in a ground coordinate system projected with the camera unit 110 as a visual point.

A well-known method may be used, as will be described below, to convert the image created by the camera unit 110 into an aerial-view image. The position of an image on the ground (for example, showing a parking spot) is obtained as an aerial-view image by performing reverse processing of common perspective conversion.

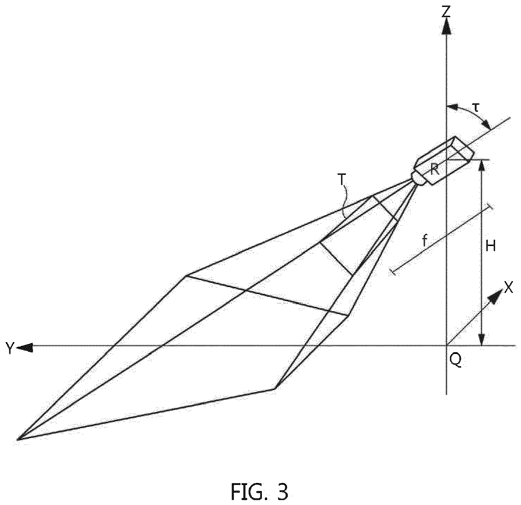

FIG. 3 is a view showing a positional relationship in coordinate conversion that is performed by an apparatus for creating an image of the area around a vehicle according to the present invention.

In detail, as shown in FIG. 3, the position data of an image on the ground is projected to a screen plan T having a focal distance f from the position R of the camera unit 110, whereby perspective conversion is performed.

In detail, it is assumed that the camera unit 110 is positioned at a point R (0, 0, H) on the Z-axis and monitors an image on the ground (X-Y plan) at an angle $\tau$. Accordingly, as shown in the following Equation 1, 2-D coordinates $(\alpha,\beta)$ on the screen plan T can be converted (reversely projected) to coordinates on the ground.

[Equation 1]

$$\begin{bmatrix} x \\ y \end{bmatrix} = \begin{bmatrix} H \cdot \alpha / (-\beta \cos\tau + f\sin\tau) \\ H \cdot (\beta\sin\tau + f\cos\tau) / (-\beta\cos\tau + f\sin\tau) \end{bmatrix}$$

That is, using Equation 1, it is possible to convert a projected image (showing an aerial-view image) into an image on the screen of the display unit 160 and then display the converted image on the display unit 160.

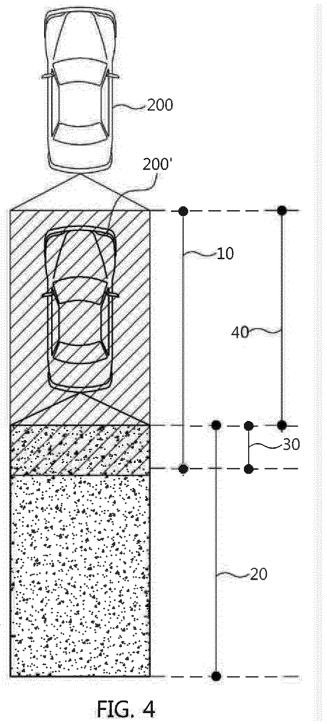

The concept of the apparatus for creating an image of the area around a vehicle according to the present invention is described hereafter with reference to FIG. 4.

FIG. 4 shows a vehicle 200 at a time point T and a vehicle 200' at a time point T+1 after a predetermined time has passed since the time point T.

The aerial-view image of the vehicle 200 created at the time point T is referred to as a previous aerial-view image 15 and the aerial-view image ofthe vehicle 200' created at the time point T+1 is referred to as a subsequent aerial-view image 20.

The previous aerial-view image 10 and the subsequent aerial-view image 20 have an aerial-view image 30 in the common area. That is, the aerial-view image 30 is an aerial-view image commonly created at the time points T and T+1.

Further, when the vehicle 200' is seen from a side at the time point T+1, the part except for the aerial-view image 30 in the common area in the previous aerial-view image 10 is a past aerial-view image 40.

The past aerial-view image 40 is an object outside of the visual field of the camera unit 110 on the rear part of the vehicle 200' at the time point T+1. That is, it means an object that is not captured at the time point T+1 that is the current time point.

It is assumed that the apparatus 100 for creating an image of the area around a vehicle according to the present invention includes the past aerial-view image 40 in the image displayed on the display unit 160 in the vehicle 200' at the time point T+1. That is, a combined image of the subsequent aerial-view image 20 and the past aerial-view image 40 in the current visual field of the camera unit 110 is displayed. The image combined in this way is referred to as a combined aerial-view image.

When the combined aerial-view image is displayed, it is required to differentiate the past aerial-view image 40 and the current image that is the subsequent aerial-view image 20 existing in the current visual field of the camera unit 110. That is, the past image is an image created on the basis of the position of the vehicle 200 at the time point T, so reliability may be slightly decreased at the time point T+1.

For example, even if a moving object that has not shown at the time point T shows at the time point T+1, the moving object is not displayed on the display unit 160, so there is the possibility of an accident.

Accordingly, a driver needs to be able to discriminate a past image from a current image when seeing the display unit 160.

Further, it is required to extract a movement area of the vehicle in order to accurately extract the past aerial-view image 40. The past aerial-view image 40 is obtained by extracting the movement area of the vehicle, so it is also referred to as a movement-area aerial-view image.

Therefore, the combined aerial-view image means a combined image of the subsequent aerial-view image 20, which is created at the time point T+1 after the previous aerial-view image 10 is created at the time point T, and the movement-area aerial-view image.

Hereafter, a method of extracting the movement area of the vehicle is described in detail.

The movement-area aerial-view image creation unit 130 creates a movement-area aerial-view image that is an aerial-view image for the movement area by extracting the movement area of the vehicle after a previous aerial-view image is created by the aerial-view image creation unit 120.

In detail, referring to FIG. 4, the previous aerial-view image 10 is displayed on the display unit 160 of the vehicle 200 at the time point T. Further, when the past aerial-view image vehicle 200' is shown on the display unit 160 of the vehicle 200' at the time point T+1, the past aerial-view image 40 and the subsequent aerial-view image 20 are both displayed on the display unit 160 of the vehicle 200'. This is referred to as a combined aerial-view image, as described above.

The subsequent aerial-view image 20 is an aerial view of an image taken by the camera unit 110 on the vehicle 200' at the time point T+1.

As described above, it is required to extract the past aerial-view image 40 in order to create the combined image and the past aerial-view image is extracted from the previous aerial-view image. In detail, the area to which the vehicle 200 has moved from the time point T to the time point T+1 is extracted. In order to extract the movement area, the area 40, which is obtained by subtracting a common area corresponding to a second aerial view from the previous aerial-view image 10 by comparing the previous aerial-view image 10 and the subsequent aerial-view image 20, is determined as the area to which the vehicle has moved.

As another method of determining the movement area of the vehicle, there is a method of extracting an area to which the vehicle has moved on the basis of traveling information of the vehicle, including the speed and the movement direction of the vehicle provided from the vehicle.

In detail, the movement area is determined by predetermined unit pixels in accordance with speed information and steering wheel information based on traveling information of the vehicle including the speed and the traveling direction of the vehicle provided from the vehicle.

For example, when the vehicle speed is 10km/h and the angle of the steering wheel is 10 degrees, the movement area is determined by moving pixels by predetermined unit pixels (for example, twenty pixels) in the traveling direction and by predetermined unit pixels (for example, ten pixels) to the left or the right in accordance with the direction of the steering wheel.

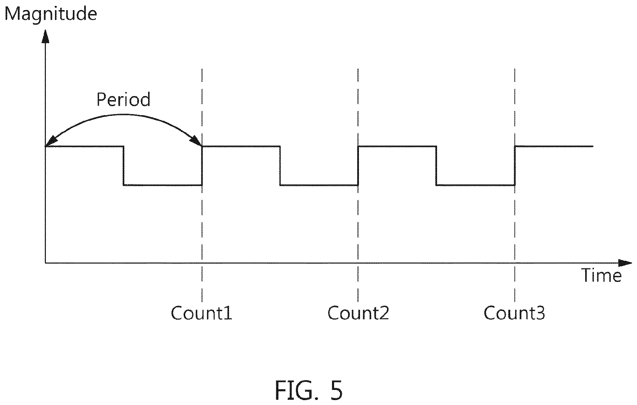

Further, as another method of determining a movement area of the vehicle, there is a method of extracting a movement area of the vehicle on the basis of wheel pulses, created by a wheel speed sensor on the vehicle, for a left wheel and a right wheel of the vehicle, which will be described with reference to FIGS. 5 to 7.

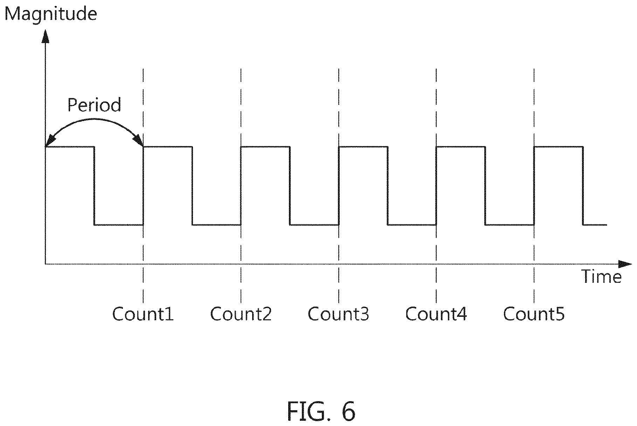

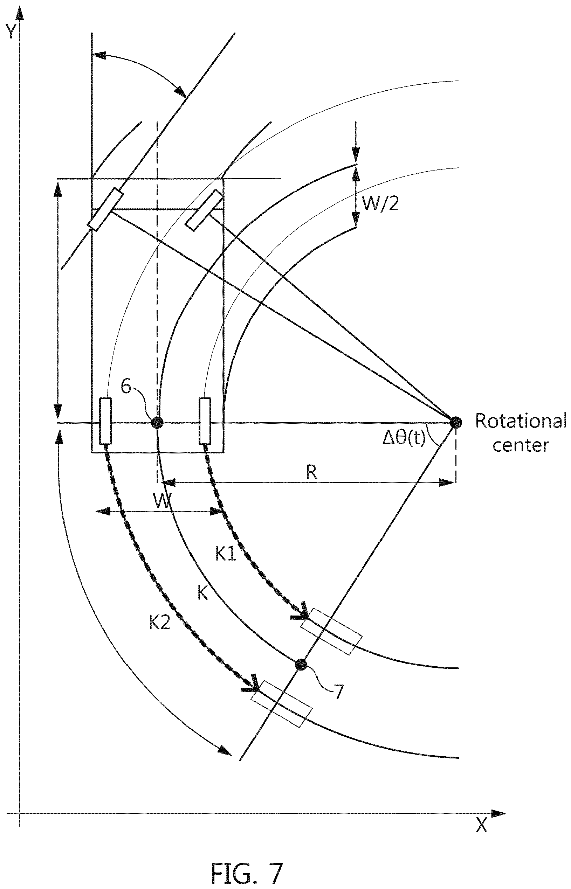

FIG. 5 is a view showing a wheel pulse for the left rear wheel of a vehicle created by an embodiment of an apparatus for creating an image of the area around a vehicle according to the present invention. Fig. 6 is a view showing a wheel pulse for the right rear wheel of a vehicle created by an embodiment of an apparatus for creating an image of the area around a vehicle according to the present invention. FIG. 7 is a view for illustrating a method of extracting an area to which a vehicle has moved by an embodiment of an apparatus for creating an image of the area around a vehicle according to the present invention.

The wheel speed sensor is mounted in a vehicle and generates wheel pulse signals, depending on the movement of left wheels and right wheels of the vehicle.

The front wheels of the vehicle are rotated differently from the rear wheels of the vehicle, so it is more effective to use the rear wheels of the vehicle in order to accurately extract the movement distance of the vehicle.

Accordingly, a rear wheel is mainly addressed to describe the wheel speed sensor. However, this description does not limit the scope of the present invention to the rear wheel that is handled by the wheel speed sensor.

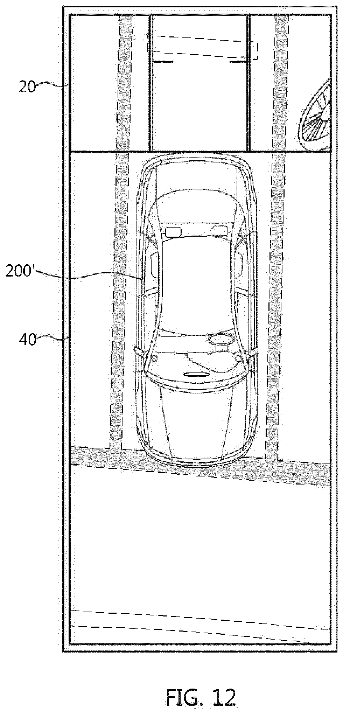

Changes in a wheel pulse signal for a left rear wheel of the vehicle over time can be seen from FIG. 12. One is counted at each period of the wheel pulse signal and the distance per period is 0.0217m.

Similarly, changes in a wheel pulse signal for a right rear wheel of the vehicle over time can be seen from FIG. 6. One is counted at each period of the wheel pulse signal and the distance per period is 0.0217m.

In detail, referring to FIGS. 5 and 6, the wheel pulse signal for the left rear wheel at the time point T has a count value of 3 because three periods are counted, but the wheel pulse signal for the right rear wheel has a count value of 5 because five periods are counted.

That is, it can be seen that the right rear wheel moved a longer distance in the same time. Accordingly, it may be possible to determine that the vehicle is driven backward with the steering wheel turned clockwise, assuming that the vehicle 1 is being driven backward.

It is possible to extract the movement distance of the vehicle on the basis of the wheel pulses for the left rear wheel and the right rear wheel shown in FIGS. 5 and 6, using the following Equations 2 to 4.

[Equation 2]

$$K1 = (WP_{in}(t + \Delta t) - WP_{in}(t)) \times WP_{res}$$

In Equation 2, K1 is the movement distance of the inner rear wheel. For example, when the vehicle 1 is driven backward with the steering wheel turned clockwise, the right rear wheel is the inner rear wheel, but when the vehicle 1 is driven backward with the steering wheel turned counterclockwise, the left rear wheel is the inner rear wheel.

Further, $WP_{out}$ is a wheel pulse count value of the outer rear wheel and $WP_{res}$ is the resolution of a wheel pulse signal, in which the movement distance per period signal is 0.0217m. That is, $WP_{res}$ is a constant 0.0217, which may be changed in accordance with the kind and setting of the wheel speed sensor.

Further, t is the time before the vehicle is moved and $\Delta t$ is the time taken to move the vehicle.

[Equation 3]

$$K2 = (WP_{out}(t + \Delta t) - WP_{out}(t)) \times WP_{res}$$

In Equation 3, K2 is the movement distance of the outer rear wheel. For example, when the vehicle 1 is driven backward with the steering wheel turned clockwise, the left rear wheel is the outer rear wheel, but when the vehicle 1 is driven backward with the steering wheel turned counterclockwise, the right rear wheel is the outer rear wheel.

Further, $WP_{out}$ is a wheel pulse count value of the outer rear wheel and $WP_{res}$ is the resolution of a wheel pulse signal, in which the movement distance per period signal is 0.0217m. That is, $WP_{res}$ is a constant of 0.0217, which may be changed in accordance with the kind and setting of the wheel speed sensor.

Further, t is the time before the vehicle is moved and $\Delta t$ is the time taken to move the vehicle.

[Equation 4]

$$K = \frac{K_1 + K_2}{2}$$

In Equation 4, K is the movement distance of an axle. The movement distance of an axle is the same as the movement distance of the vehicle.

Further, K1 is the movement distance of the inner rear wheel and K2 is the movement distance of the outer rear wheel That is, the movement distance of the axle that is the movement distance of the vehicle is the average of the movement distance of the inner wheel of the vehicle and the movement distance of the outer wheel of the vehicle.

Accordingly, the movement distance extractor 131 can extract the movement distance of the vehicle 1 through Equations 2 to 4.

A method of extracting the turning radius and the coordinates of the new position of the vehicle using the extracted movement distance is described.

FIG. 7 is a view for illustrating a method of extracting an area to which a vehicle has moved by an embodiment of an apparatus for creating an image of the area around a vehicle according to the present invention.

Referring to FIG. 7, the current position 6 of the vehicle 1 is the center between the left rear wheel and the right rear wheel and is the same as the current center position of the axle. Further, it can be seen that the position 7 after the vehicle 1 is moved is the center between the left rear wheel and the right rear wheel of the vehicle at the movement position.

A method of extracting the turning radius of the vehicle on the basis of the difference of wheel pulses of the left rear wheel and the right rear wheel is described hereafter with reference to the following Equations 5 to 8.

[Equation 5]

$$K_1 = (R - \frac{W}{2})\Delta\theta(t)$$

In Equation 5, K1 is the movement distance of the inner rear wheel and R is the turning radius of the vehicle. In detail, the turning radius means the turning radius of the axle.

W is the width of the vehicle. In detail, W means the distance between the left rear wheel and the right rear wheel. Further, $\Delta\theta(t)$ is variation in the angle of the vehicle during time t.

[Equation 6]

$$K_2 = (R + \frac{W}{2})\Delta\theta(t)$$

In Equation 6, K2 is the movement distance of the outer rear wheel and R is the turning radius of the vehicle. In detail, the turning radius means the turning radius of the axle.

Further, W is the width of the vehicle and $\Delta\theta(t)$ is variation in the angle of the vehicle during time t.

[Equation 7]

$$K_2 - K_1 = W\Delta\theta(t)$$

In Equation 7, K2 is the movement distance of the outer rear wheel and K1 is the movement distance of the inner rear wheel. Further, W is the width of the vehicle and $\Delta\theta(t)$ is variation in the angle of the vehicle during time t.

[Equation 8]

$$\Delta\theta(t) = \frac{K_2 - K_1}{W}$$

Equation 8 is obtained by rearranging Equation 7 to $\Delta\theta(t)$ that is the variation of the angle of the vehicle for time t. That is, $\Delta\theta(t)$ that is the variation of the angle of the vehicle during time t can be obtained by dividing the value, obtained by subtracting K1 obtained in Equation 6 from K2 obtained in Equation 5, by the predetermined W that is the width of the vehicle.

Accordingly, all of K1, K2, $\Delta\theta(t)$, and W can be found, so R that is the turning radius of the vehicle can be obtained by substituting the values into Equation 5 or 6.

A method of extracting the distance that the vehicle moves on the basis of the extracted turning radius and the extracted movement distance is described with reference to the following Equations 9 to 17.

[Equation 9]

$$x_c(t) = x(t) + R\cos\theta(t)$$

In Equation 9, $x_c(t)$ is the position of the x-coordinate of a rotational center and x(t) is the position of the x-coordinate of the current center position of the axle that is the current position of the vehicle. The current center position of the axle means the center position between the left rear wheel and the right rear wheel, which was described above. Further, θ(t) is the current angle of the vehicle.

[Equation 10]

$$y_c(t) = y(t) + R\sin\theta(t)$$

In Equation 10, $y_c(t)$ is the position of the y-coordinate of a rotational center and y(t) is the position of the x-coordinate of the current center position of the axle that is the current position of the vehicle. Further, θ(t) is the current angle of the vehicle.

[Equation 11]

$$x'(t) = x(t) - x_c(t) = -R\cos\theta(t)$$

In Equation 11, x'(t) is the position of the x-coordinate of the current center position of the axle when the rotational center is the origin and x(t) is the position of the x-coordinate of the current center position of the axle that is the current position of the vehicle. Further, θ(t) is the current angle of the vehicle.

[Equation 12]

$$y'(t) = y(t) - y_c(t) = -R\sin\theta(t)$$

In Equation 12, y'(t) is the position of the y-coordinate of the current center position of the axle when the rotational center is the origin and y(t) is the position of the y-coordinate of the current center position of the axle that is the current position of the vehicle. Further, θ(t) is the current angle of the vehicle.

[Equation 13]

$$\begin{pmatrix} x'(t+\Delta t) \\ y'(t+\Delta t) \end{pmatrix} = \begin{pmatrix} \cos\Delta\theta(t) & -\sin\Delta\theta(t) \\ \sin\Delta\theta(t) & \cos\Delta\theta(t) \end{pmatrix} \begin{pmatrix} x'(t) \\ y'(t) \end{pmatrix}$$

In Equation 13, x'(t+Δt) is the position of the x-coordinate of the center position after the axle is moved when the rotational center is the origin and y'(t+Δt) is the position of the y-coordinate of the center position after the axle is moved when the rotational center is the origin.
Further, Δθt is variation in the angle of the vehicle during time t, x'(t) is the position of the x-coordinate of the current center position of the axle when the rotational center is the origin, and y'(t) is the position of the y-coordinate of the current center position of the axle when the rotational center is the origin. That is, Equation 13 is a rotation conversion equation for calculating the center position of the axle moved during time Δt, when the rotational center is the origin.

[Equation 14]

$$x(t + \Delta t) = x'(t + \Delta t) + x_c(t)$$

where x(t+Δt) is the position of the X-coordinate of the center position after the axle is moved. That is, it does not mean the value of an absolute position, but means a position determined without considering the rotational center as the origin. Further, x'(t+Δt) is the position of the x-coordinate of the center position after the axle is moved when the rotational center is the origin and $x_c(t)$ is the position of the X-coordinate of the rotational center.

[Equation 15]

$$y(t + \Delta t) = y'(t + \Delta t) + y_c(t)$$

In Equation 15, y(t+Δt) is the position of the y-coordinate of the center position after the axle is moved. That is, it does not mean the value of an absolute position, but means a position without considering the rotational center as the origin. Further, y'(t+Δt) is the position of the y-coordinate of the center position after the axle is moved when the rotational center is the origin and $y_c(t)$ is the position of the y-coordinate of the rotational center.

[Equation 16]

$$x(t + \Delta t) = x(t) + R(\cos \theta(t) - \cos \Delta \theta(t) \cos \theta(t) + \sin \Delta \theta(t) \sin \theta(t))$$

Equation 16 is obtained by substituting Equations 9 to 13 into Equation 14 and is the final equation capable of obtaining x(t+Δt) that is the position of the X-coordinate of the center position after the axle is moved.

[Equation 17]

$$y(t + \Delta t) = y(t) + R(\sin \theta(t) - \sin \Delta \theta(t) \cos \theta(t) - \cos \Delta \theta(t) \sin \theta(t))$$

Equation 17 is obtained by substituting Equations 9 to 13 into Equation 15 and is the final equation capable of obtaining y(t+Δt) that is the position of the y-coordinate of the center position after the axle is moved. Accordingly, it is possible to extract the area to which the vehicle has moved.

The combined aerial-view image creation unit 140 combines the subsequent aerial-view image 20, which is created after the previous aerial-view image 10 shown in FIG. 4 is created, with the past aerial-view image 40 that is the movement-area aerial-view image.

Accordingly, the driver can see the aerial-view image 40 for the part not captured by the camera unit 110, even if the vehicle exists at the time point T+1 (200') after moving backward.

The combined aerial-view image correction unit 150 creates a corrected combined aerial-view image by correcting an image to differentiate a subsequent aerial-view image that is the current image and a movement-area aerial-view image that is a past image.

In detail, it is possible to correct a movement-area aerial-view image created by the movement-area aerial-view image creating unit 130.

That is, by correcting the movement-area aerial-view image that is the past image before a combined aerial-view image is created by the combined aerial-view image creation unit 140, a subsequent aerial-view image that is the current image and a movement-area aerial-view image that is the past image are differentiated. Accordingly, a combined aerial-view image is created by the combined aerial-view image creating unit 140 with the current image and the past image differentiated.

As another method, a method of correcting the combined aerial-view image created by the combined aerial-view image creating unit 140 may be exemplified.

In this case, a combined aerial-view image is created by the combined aerial-view image creation unit 140 and is then corrected so that a subsequent aerial-view image that is the current image and a movement-area aerial-view image that is the past image are differentiated. Accordingly, if a combined aerial-view image is created by the combined aerial-view image creating unit 140 without the current image and the past image differentiated, the combined aerial-view image correction unit 150 corrects the combined aerial-view image, whereby the current image and the past image can be differentiated.

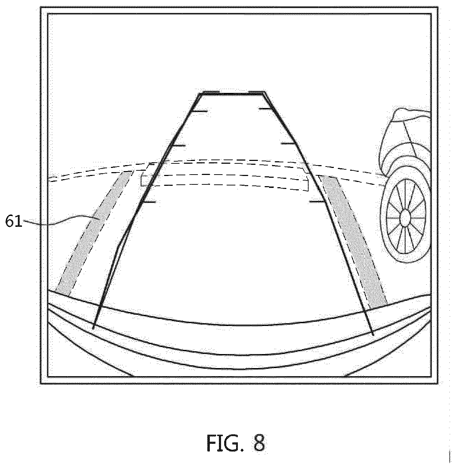

FIG. 8 is a view showing an image taken by the camera unit 110 on a vehicle and output on the display unit 110.

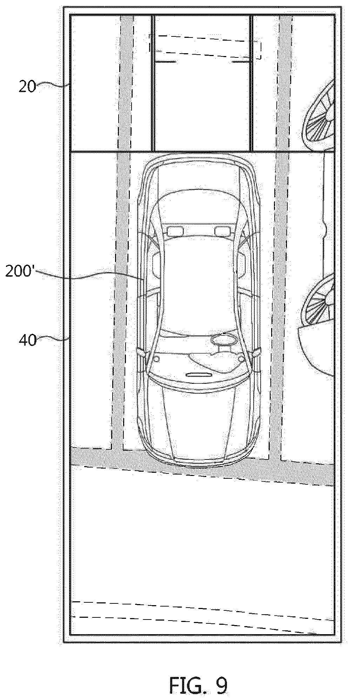

FIG. 9 is a view showing a combined aerial-view image before corrected by the combined aerial-view image correction unit 150.

In detail, a current aerial-view image 20 in the visual field of the camera unit 110 on the vehicle 200' and a past aerial-view image 40 outside of the visual field of the camera unit 110 are both present in the combined aerial-view image.

In this case, when the past aerial-view image 40 is a virtual image, reliability is a little low. Accordingly, even if an object that did not exist at a past time point exists at present, it is not displayed on the display unit 160.

Accordingly, the past aerial-view image 40 and the current image 20 are differentiated by the combined aerial-view image correction unit 150.

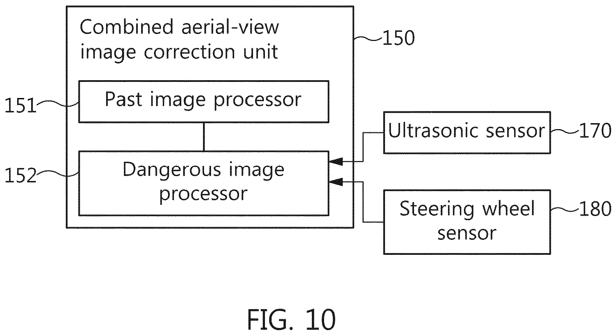

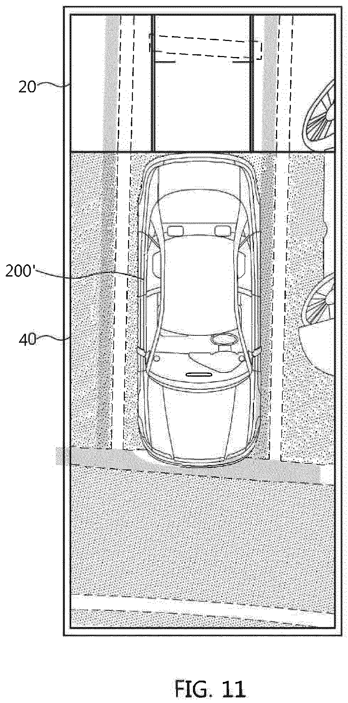

FIG. 10 is a view showing an embodiment of a combined aerial-view image correction unit in an apparatus for creating an image of the area around a vehicle according to the present invention. FIGS. 11 to 13 are views showing output images on a display unit according to an embodiment of an apparatus for creating an image of the area around a vehicle according to the present invention.

Referring to FIG. 10, the combined aerial-view image correction unit 150 includes a past image processor 151 and a dangerous area image processor 152.

Hereafter, the past image processor 151 is described in detail.

The past image processor 151 extracts a movement-area aerial-view image that is the past image from the combined aerial-view image and processes the movement-area aerial-view image that is the past image.

That is, since the movement-area aerial-view image that is a past image is included in the combined aerial-view image, the movement-area aerial-view image that is the past image is first detected from the combined aerial-view image.

The past image processor 151 may perform at least any one of color adjustment, desaturation, blur, sketch, sepia, negative, embossing, and mosaic processing on the movement-area aerial-view image that is the detected past image.

In detail, a movement-area aerial-view image that is a past image and to which white desaturation is applied can be seen in FIG. 11.

When a special effect is applied to a past image, a driver can easily distinguish the past image from the current image, so it is possible to prevent an accident.

Further, the past image processor 151 may perform at least any one of color adjustment, desaturation, blur, sketch, sepia, negative, embossing, and mosaic processing on the movement-area aerial-view image that is the past image, in different ways step by step on the basis of past time points.

For example, it may be possible to divide the movement-area aerial-view image that is the past image in steps in accordance with past times and then make older ones opaque or intensively mosaic. Accordingly, a driver can not only discriminate the current image and the past image, but recognize the past image in stages in accordance with the amount of time that has passed.

Further, the past image processor 151 can extract parking lines from a movement-area aerial-view image that is the past image in the combined aerial-view image and perform image processing on the parking lines.

In detail, it may be possible to apply at least any one of color adjustment, desaturation, blur, sketch, sepia, negative, embossing, and mosaic processing to the parking lines.

Further, the past image processor 151 may make the parking lines conspicuous by applying noise to the other part except the parking lines in the movement-area aerial-view image that is the past image.

Referring to FIG. 12, only parking lines are displayed in a movement-area aerial-view image that is the past image so that a driver can clearly recognize the parking lines, and it can be seen that there is no information other than the parking lines, so it is possible to induce a driver not to trust the movement-area aerial-view image 40 that is the past image.

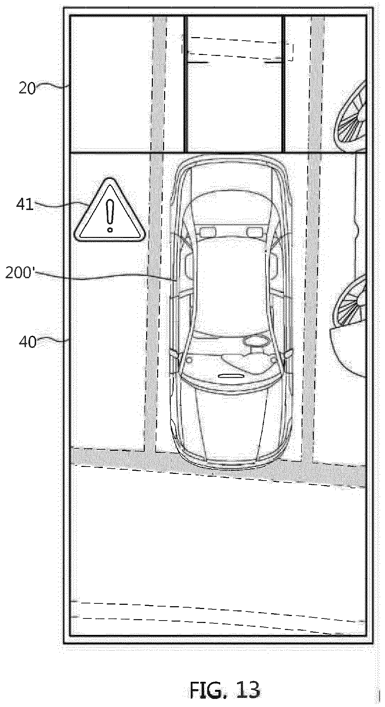

Further, referring to FIG. 13, it may be possible to add a warning 41 in a movement-area aerial-view image that is the past image. That is, a driver is clearly informed of a past image.

Further, it may be possible to differentiate the past aerial-view image 40 and the current image 20 by drawing a V-shaped line showing the visual angle and the vehicle in the combined aerial-view image.

Hereafter, the dangerous image processor 152 is described in detail.

The dangerous image processor 152 displays a dangerous area in the combined aerial-view image by correcting the combined aerial-view image in response to the possibility of a collision of the vehicle.

That is, it is determined whether there is a possibility of a collision between the vehicle and another object, and then when it is determined that there is the possibility of such a collision, it is possible to prevent a car accident by informing a driver of the possibility of the car accident by displaying a specific dangerous area in the combined aerial-view image.

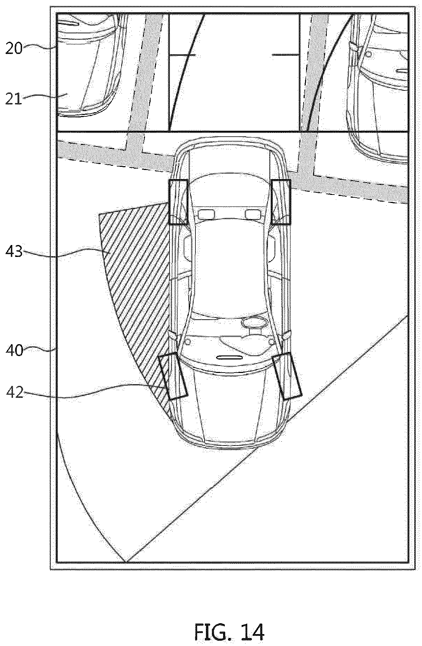

Referring to FIG. 14, a dangerous area 42 may be shown in the movement-area aerial-view image 40 that is the past image.

In order to determine whether the vehicle has a possibility of colliding with another object, it may be possible to use an ultrasonic sensor in the vehicle or a steering wheel sensor in the vehicle, and detailed description will be described below with reference to FIG. 14.

The dangerous area processor 152 can display the dangerous area 42 in front of or at a side of the vehicle in the combined aerial-view image by correcting the combined aerial-view image in response to the distance between the vehicle and an object 21 that is sensed by at least one ultrasonic sensor 170 in the vehicle.

In detail, it is possible to display a dangerous area by displaying a virtual turning area of a front corner of the vehicle from the front corner of the vehicle to a side by creating the corrected combined aerial-view image in response to the distance between the vehicle and an object sensed by at least one ultrasonic sensor in the vehicle.

That is, when at least one ultrasonic sensor 170 in the vehicle senses an object 21 around the vehicle, it is determined that the vehicle has a possibility of colliding with the object 21. Obviously, the smaller the distance between the vehicle and the object 21, the greater the possibility of a collision.

A driver is informed of danger by correcting the combined aerial-view image so that the dangerous area 42 is shown in front of or at a side of the vehicle in the combined aerial-view image.

That is, a dangerous area was shown only in the image (for example, the area behind a vehicle) within the visual field of the camera unit 110 in the related art, but, according to an embodiment of the present invention, a dangerous area is shown in front of or at a side of a vehicle in a combined aerial-view image within the visual field of the camera unit 110, thereby informing the driver of danger.

As another embodiment of showing the dangerous area 42, it may be possible to show the dangerous area 42 from the front to the right side of the vehicle or from the front to the left side of the vehicle.

In detail, when an object 21 sensed by the ultrasonic sensor 170 is close to the vehicle, it is possible to allow a driver to more easily recognize the object by using a larger image or a deeper color image when showing the dangerous area.

In contrast, when the distance between an object 21 sensed by the ultrasonic sensor and the vehicle is a predetermined distance or more and the possibility of collision of the vehicle is low, it may be possible to use a smaller image or a lighter color image when showing the dangerous area.

However, the distance between the object 21 sensed by the ultrasonic sensor 170 and the vehicle changes because the vehicle is moved, so the dangerous area 42 may be shown differently in real time.

For example, when the vehicle is approaching the sensed object 21, the dangerous area 42 may be shown differently in real time in accordance with the distance between the vehicle and the sensed object 21.

Further, the dangerous area processor 152 can make the dangerous area 42 be shown in front of or at a side of the vehicle in the combined aerial-view image by extracting the turning angle of the vehicle using the steering wheel sensor 180 in the vehicle and by correcting the combined aerial-view image in response to the turning angle of the vehicle.

In detail, it is possible to display a dangerous area by displaying a virtual turning area of a front corner of the vehicle from the front corner of the vehicle to a side by extracting the turning angle of the vehicle using the steering wheel sensor in the vehicle and by creating the corrected combined aerial-view image in response to the turning angle of the vehicle.

That is, a dangerous area is shown only in the image (for example, the area behind a vehicle) within the visual field of the camera unit 110 in the related art, but, according to an embodiment of the present invention, a dangerous area is shown in front of or at a side of a vehicle in a combined aerial-view image within the visual field of the camera unit 110, thereby informing a driver of danger.

In detail, the rotational angle of the steering wheel in the vehicle is extracted by the steering wheel sensor 180 in the vehicle, the turning angle of the vehicle corresponding to the rotational angle of the steering wheel 4 is extracted, and then the possibility of a collision of the vehicle is determined on the basis of the turning angle of the vehicle.

The possibility of collision of the vehicle is determined in consideration of the turning angle of the vehicle.

Referring to FIG. 14, when a driver drives the vehicle backward with the steering wheel 4 turned counterclockwise, the turning angle of the vehicle is extracted through the steering wheel sensor 180 and the dangerous area 42 is shown at the right side of the vehicle.

On the other hand, when a driver drives the vehicle backward with the steering wheel 4 turned clockwise, the turning angle of the vehicle is extracted through the steering wheel sensor 180 and a dangerous area is shown at the left side of the vehicle.

Further, when the driver turns the steering wheel 4 in another direction or changes the angle of the steering wheel 4, the dangerous area 42 may be changed in real time. Further, the shown dangerous area 42 may be changed in accordance with the traveling direction of the vehicle.

For example, when a driver drives the vehicle backward with the steering wheel 4 turned counterclockwise, the dangerous area 42 is shown in front of or at the right side of the vehicle, but in this case, when the vehicle is turned, the shown dangerous area 42 may be removed.

As another embodiment of showing the dangerous area 42, it may be possible to show the dangerous area 42 from the front to the right side of the vehicle or from the front to the left side of the vehicle.

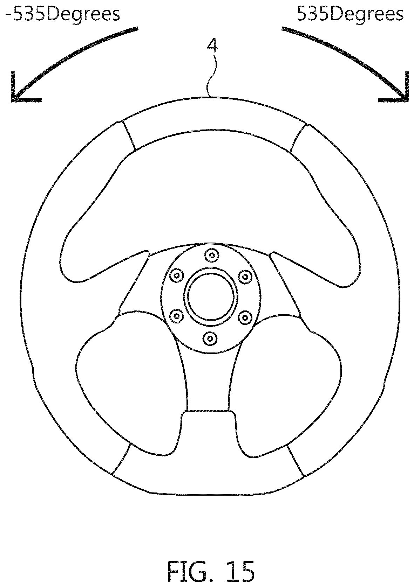

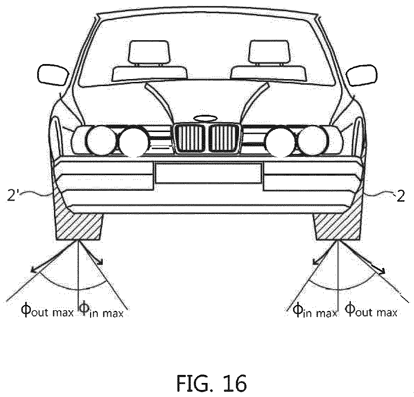

The operation principle of extracting the turning angle of a vehicle using the steering wheel sensor is described with reference to FIGS. 15 and 16. FIG. 15 is a view for illustrating a steering wheel sensor in a vehicle. FIG. 16 is a view for illustrating rotational angles of a left front wheel and a right front wheel of a vehicle.

The maximum angle of the steering wheel 4 of the vehicle 1 can be seen from FIG. 15. In detail, it can rotate up to 535 degrees counterclockwise (that is, -535 degrees) and 535 degrees clockwise. The steering wheel sensor in the vehicle 1 is used to sense the angle of the steering wheel 4.

Referring to FIG. 16, the angles of a left front wheel 2 and a right front wheel 2' of a vehicle can be seen. In this case, the maximum outer angle $\phi_{out\,max}$ is 33 degrees and the maximum inner angle $\phi_{out\,max}$ is 39 degrees. However, the maximum outer and inner angles may depend on the kind of the vehicle and technological development.

In detail, it is possible to sense the rotational angle of the steering wheel 4 in the vehicle through the steering wheel sensor 180 and it is also possible to calculate the rotational angles of the left front wheel 2 and the right front wheel 2' of the vehicle on the basis of the rotational angle of the steering wheel 4.

That is, it is possible to sense the angle of the steering wheel 4 and then calculate the angles of the front wheels 2 and 2' of the vehicle 1 on the basis of the sensed angle of the steering wheel 4.

A detailed method of obtaining the angles of the front wheels 2 and 2' of the vehicle 1 uses the following Equations.

[Equation 18]

$$\phi_{out} = W_{data} \times \frac{\phi_{out\,max}}{5350} = W_{data} \times \frac{33}{5350}$$

[Equation 19]

$$\phi_{in} = W_{data} \times \frac{\phi_{in\,max}}{5350} = W_{data} \times \frac{39}{5350}$$

In Equations 18 and 19, $\phi_{out}$ is the angle of the outer side of the front wheel of the vehicle 1 that is being turned and $\phi_{in}$ is the angle of the inner side of the front wheel of the vehicle 1 that is being turned. Further, $\phi_{out\,max}$ that is the maximum outer angle is 33 degrees and $\phi_{in\,max}$ that is the maximum inner angle is 39 degrees.

In detail, when the vehicle 1 is driven backward with the steering wheel 4 turned clockwise, the angle of the inner side is calculated on the basis of the left front wheel 2 and the angle of the outer side is calculated on the basis of the right front wheel 2'. Further, when the vehicle 1 is driven backward with the steering wheel 4 turned counterclockwise, the angle of the inner side is calculated on the basis of the right front wheel 2' and the angle of the outer side is calculated on the basis of the left front wheel 2.

Further, $W_{data}$ is a value obtained from the steering wheel sensor 180, so it has a range of -535 degrees to 535 degrees.

Accordingly, the steering wheel sensor 180 can calculate the turning angle of the vehicle.

A method of creating an image of the area around a vehicle according to the present invention is described hereafter. The configuration described above with reference to the apparatus for creating an image of the area around a vehicle according to the present invention is not described again herein.

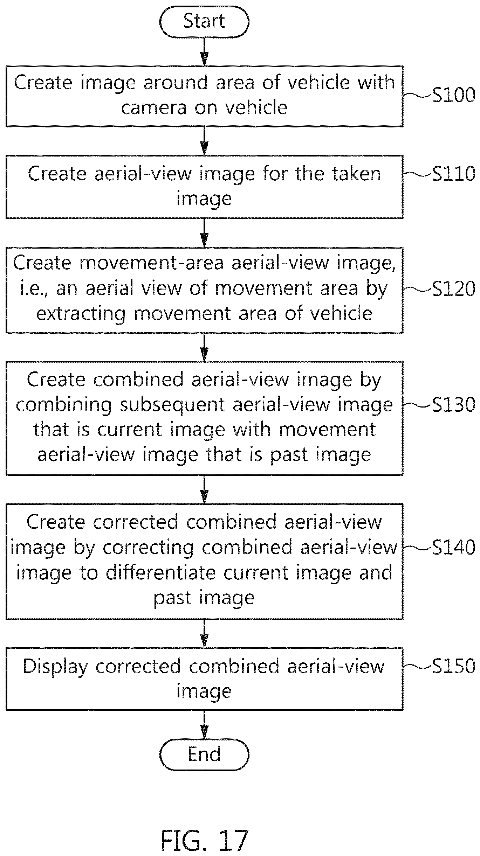

FIG. 17 is a flowchart of a method of creating an image of the area around a vehicle according to the present invention.

Referring to FIG. 17, a method of creating an image of the area around a vehicle according to the present invention include: creating an image by capturing a peripheral area of a vehicle using a camera unit on the vehicle (S100); creating an aerial view image by converting the captured image into data on a ground coordinate system projected with the camera unit as a visual point (S110); creating a movement-area aerial-view image that is an aerial view of movement area of the vehicle moved, by extracting the movement area of the vehicle (S120) after a previous aerial-view image is created in the creating of an aerial-view image; creating a combined aerial-view image by combining a subsequent aerial-view image, which is a current image created after the previous aerial-view image is created, with a movement-area aerial-view image that is a past image (S130); and creating a corrected combined aerial-view image by correcting a combined aerial-view image to differentiate the subsequent aerial-view image that is the current image and the movement-area aerial-view image that is the past image (S140).

The method may further include displaying the corrected combined aerial-view image on a display unit in the vehicle (S150) after the creating of a corrected combined aerial-view image (S140).

The apparatus and method of creating an image of the area around a vehicle according to the present invention are not limited to the configurations exemplified in the embodiments described above and some or all of the embodiments may be selectively combined to achieve various modifications.

**Claims**

1. An apparatus for creating an image of an area around a vehicle, the apparatus comprising:

   an aerial-view image creation unit that creates an aerial-view image by converting an image of an area around a vehicle, which is taken by a camera unit mounted on the vehicle, into data on a ground coordinate system projected with the camera unit as a visual point;

   a movement-area aerial-view image creation unit that creates a movement-area aerial-view image that is an aerial view of a movement area of the vehicle, by extracting the movement area, after a previous aerial-view image is created by the aerial-view image creation unit;

   a combined aerial-view image creation unit that creates a combined aerial-view image by combining a subsequent aerial-view image, which is a current image created after the previous aerial-view image is created, with the movement-area aerial-view image that is a past image; and

   a combined aerial-view image correction unit that creates a corrected combined aerial-view image by correcting an image to differentiate the subsequent aerial-view image that is the current image and the movement-area aerial-view image that is the past image.

2. The apparatus of claim 1, wherein the movement-area aerial-view image creation unit extracts a movement area of the vehicle on the basis of wheel pulses created by a wheel speed sensor in the vehicle for a left wheel and a right wheel of the vehicle.

3. The apparatus of claim 1, wherein the combined aerial-view image correction unit includes a past image processor that processes the movement-area aerial-view image that is the past image.

4. The apparatus of claim 3, wherein the past image processor performs at least one of color adjustment, desaturation, blur, sketch, sepia, negative, embossing, and mosaic processing on the movement-area aerial-view image that is the past image.

5. The apparatus of claim 3, wherein the past image processor processes the movement-area aerial-view image that is the past image in different ways step by step on the basis of past time points.

6. The apparatus of claim 3, wherein the past image processor detects parking lines from the movement-area aerial-view image that is the past image in the combined aerial-view image and then performs image processing on the parking lines.

7. The apparatus of claim 3, wherein the past image processor detects parking lines from the movement-area aerial-view image that is the past image in the combined aerial-view image and then makes the parking lines conspicuous by performing image processing on areas other than the parking lines.

8. The apparatus of claim 1, wherein the combined aerial-view image correction unit includes a dangerous image processor that shows a dangerous area in the combined aerial-view image in response to a possibility of collision of the vehicle.

9. The apparatus of claim 8, wherein the dangerous area processor displays a dangerous area by displaying a virtual turning area of a front corner of the vehicle from the front corner of the vehicle to a side by correcting the combined aerial-view image in response to a distance between the vehicle and an object sensed by at least one ultrasonic sensor in the vehicle.

10. The apparatus of claim 8, wherein the dangerous area processor extracts a turning angle of the vehicle through a steering wheel sensor in the vehicle and displays a dangerous area by displaying a virtual turning area of a front corner of the vehicle from the front corner of the vehicle to a side by correcting the combined aerial-view image in response to the turning angle of the vehicle.

11. A method of creating an image of an area around a vehicle, comprising:

creating an aerial-view image by converting an image of an area around a vehicle, which is taken by a camera unit mounted on the vehicle, into data on a ground coordinate system projected with the camera unit as a visual point, by means of aerial-view image creation unit;

creating a movement-area aerial-view image that is an aerial view of a movement area of the vehicle, by extracting the movement area, after a previous aerial-view image is created in the creating of an aerial-view image, by means of a movement-area aerial-view image creation unit;

creating a combined aerial-view image by combining a subsequent aerial-view image, which is a current image created after the previous aerial-view image is created, with the movement-area aerial-view image that is a past image, by means of a combined aerial-view image creation unit; and

creating a corrected combined aerial-view image by correcting an image to differentiate the subsequent aerial-view image that is the current image and the movement-area aerial-view image that is the past image, by means of a combined aerial-view image correction unit.

12. The method of claim 11, wherein the creating of a movement-area aerial-view image extracts a movement area of the vehicle on the basis of wheel pulses created by a wheel speed sensor in the vehicle for a left wheel and a right wheel of the vehicle.

13. The method of claim 11, wherein the creating of a corrected combined aerial-view image comprises processing of the movement-area aerial-view image that is the past image in the combined aerial-view image.

14. The method of claim 13, wherein the processing of the movement-area aerial-view image that is the past image performs at least one of color adjustment, desaturation, blur, sketch, sepia, negative, embossing, and mosaic processing on the movement-area aerial-view image that is the past image.

15. The method of claim 13, wherein the processing of the movement-area aerial-view image that is the past image processes the movement-area aerial-view image that is the past image in different ways step by step on the basis of past time points.

16. The method of claim 13, wherein the processing of the movement-area aerial-view image that is the past image detects parking lines from the movement-area aerial-view image that is the past image in the combined aerial-view image and then performs image processing on the parking lines.

17. The method of claim 13, wherein the processing of the movement-area aerial-view image that is the past image detects parking lines from the movement-area aerial-view image that is the past image in the combined aerial-view image and then makes the parking lines conspicuous by performing image processing on areas other than the parking lines.

18. The method of claim 11, wherein the creating of a corrected combined aerial-view image includes displaying a dangerous area in the combined aerial-view image in response to a possibility of collision of the vehicle.

19. The method of claim 18, wherein the displaying of a dangerous area displays a dangerous area by displaying a virtual turning area of a front corner of the vehicle from the front corner of the vehicle to a side by creating the corrected combined aerial-view image in response to a distance between the vehicle and an object sensed by at least one ultrasonic sensor in the vehicle.

20. The method of claim 18, wherein the displaying of a dangerous area extracts a turning angle of the vehicle through a steering wheel sensor in the vehicle and displays a dangerous area by displaying a virtual turning area of a front corner of the vehicle from the front corner of the vehicle to a side by creating the corrected combined aerial-view image in response to the turning angle of the vehicle.

FIG. 1

<u>100</u>

110

Camera unit

120

Aerial-view image creation unit

130

Movement-area aerial-view creation unit

160

Display unit

150

Combined aerial-view image correction unit

140

Combined aerial-view image creation unit

FIG. 2

FIG. 3

FIG. 4

FIG. 5

FIG. 6

FIG. 7

61

FIG. 8

FIG. 9

Combined aerial-view
image correction unit ⌒150

151⌒ Past image processor

Ultrasonic sensor ⌒170

152⌒ Dangerous image
processor

Steering wheel
sensor ⌒180

FIG. 10

FIG. 11

FIG. 12

FIG. 13

FIG. 14

-535Degrees

535Degrees

4

FIG. 15

FIG. 16

Start

Create image around area of vehicle with camera on vehicle — S100

Create aerial-view image for the taken image — S110

Create movement-area aerial-view image, i.e., an aerial view of movement area by extracting movement area of vehicle — S120

Create combined aerial-view image by combining subsequent aerial-view image that is current image with movement aerial-view image that is past image — S130

Create corrected combined aerial-view image by correcting combined aerial-view image to differentiate current image and past image — S140

Display corrected combined aerial-view image — S150

End

FIG. 17

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20080024772